# EUROPEAN PATENT APPLICATION

(11) **EP 4 776 734 A1**
(43) Date of publication of application: **15.07.2026**
(21) Application number: 24876462.3
(22) Date of filing: 30.09.2024
(51) Int. Cl.: H04W 72/232, H04W 74/08

(54) **COMMUNICATION METHOD AND APPARATUS**

(30) Priority: 09.10.2023 CN 202311302005
(71) Applicant: HUAWEI TECHNOLOGIES CO., LTD., Shenzhen 518129 (CN)
(72) Inventor: HAN, Chao, Shenzhen, Guangdong 518129 (CN); WU, Yiling, Shenzhen, Guangdong 518129 (CN); LUO, Zhihu, Shenzhen, Guangdong 518129 (CN)
(74) Representative: Isarpatent
(86) International application number: PCT/CN2024/122803
(87) International publication number: WO 2025/077647

(57) **Abstract**

This application provides a communication method and apparatus. The method simplifies a random access procedure. For example, downlink control information DCI, normally carried on a physical downlink control channel PDCCH, is simplified as DCI accompanying a Msg 4. This helps reduce indication overhead or eliminate PDCCH blind detection, and lower design complexity of A-IoT. For another example, first indication information indicating random access conflict resolution is directly carried in a PDCCH after a Msg 3. This bypasses a Msg 4 procedure, thereby reducing system message overhead.

## Description

This application claims priority to Chinese Patent Application No. 202311302005.5, filed with the China National Intellectual Property Administration on October 9, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Low-power ambient internet of things (ambient internet of things, A-IoT) has limitations such as restricted available resources, constrained terminal capabilities (such as low-power operation and limited hardware functions), and inefficient resource utilization due to its reliance on non-coherent demodulation. Given that deployment density of future A-IoT is expected to be at least one order of magnitude higher than that of narrow band IoT (narrow band IoT, NB-IoT), simply applying the random access procedure of NB-IoT to A-IoT could lead to poor access efficiency and excessive access overhead, hindering successful deployment of A-IoT.

### SUMMARY

This application provides a communication method and apparatus. The method provides a simplified random access solution to help reduce system message overhead or indication overhead.

According to a first aspect, this application provides a communication method. The method is performed by a first apparatus, or performed by a component (for example, a processor, a chip, or a chip system) of the first apparatus, or may be performed by a logical module that can implement all or some functions of the first apparatus. For example, the first apparatus may be a terminal (for example, a low-power ambient internet of things (ambient internet of things, A-IoT) device). The first apparatus receives a first message, where the first message includes downlink control information and first indication information, the downlink control information indicates a first time-frequency resource, and the first indication information indicates random access contention resolution. The first apparatus sends a second message on the first time-frequency resource.

In this method, the communication method implemented by the apparatus simplifies a random access procedure. For example, downlink control information DCI, normally carried on a physical downlink control channel (physical downlink control channel, PDCCH), is simplified as the DCI accompanying a Msg 4. This helps reduce indication overhead or eliminate PDCCH blind detection, and lower design complexity of A-IoT. For another example, the first indication information indicating random access conflict resolution is directly carried in the PDCCH after a Msg 3. This bypasses a Msg 4 procedure, thereby reducing system message overhead

In a possible implementation, the first message is a downlink message, and is carried on a physical downlink shared channel.

In the method, the first message is, for example, a Msg 4 in a four-step random access procedure or a Msg B in a two-step random access procedure, and is carried on a physical downlink shared channel (physical uplink shared channel, PUSCH). This helps reduce indication overhead.

In a possible implementation, the first message is a downlink message and is carried on a physical downlink control channel.

In this method, the first message is, for example, a message after the Msg 3 in the four-step random access procedure, and is carried on a PDCCH to serve as the Msg 4. This helps reduce system message overhead.

In a possible implementation, the downlink control information further indicates a size of uplink data.

In the method, the downlink control information may further indicate a size of the uplink data, for example, indicate one or more of a packet size, a bit value, or a byte value of the uplink data.

In a possible implementation, the second message is an uplink message and is carried on a physical uplink shared channel or a physical uplink control channel. The second message includes at least one of the following: the uplink data, and a hybrid automatic repeat request acknowledgment HARQ-ACK for the first message.

In the method, it is assumed that the first message is a Msg 4, and the second message is a Msg 5 carried on a physical uplink shared channel PUSCH. An acknowledgement (acknowledgement, ACK) feedback of the Msg 4 may be carried by the Msg 5 (PUSCH). This helps reduce indication overhead.

In a possible implementation, the first message further includes second indication information, and the second indication information indicates a second time-frequency resource. If the first message is not correctly detected, the first apparatus sends a hybrid automatic repeat request negative acknowledgment (hybrid automatic repeat request negative acknowledgment, HARQ-NACK) for the first message on the second time-frequency resource.

In the method, the second indication information may be carried in the first message (for example, DCI accompanying the Msg 4), to help reduce indication overhead. If the first apparatus does not correctly detect the first message (for example, does not correctly detect the Msg 4), the first apparatus may feed back, based on the second indication information, a negative acknowledgement (negative acknowledgement, NACK) on the corresponding second time-frequency resource. This helps a peer side accurately receive the NACK feedback on the corresponding second time-frequency resource and proceed with a subsequent procedure.

In a possible implementation, the first message is carried on a physical downlink shared channel, and the second indication information is carried on a physical downlink control channel sent before the first message, and indicates the second time-frequency resource. If the first message is not correctly detected, the first apparatus sends, on the second time-frequency resource, a hybrid automatic repeat request negative acknowledgment HARQ-NACK for the first message.

In the method, the second indication information may be carried not only in the DCI accompanying the Msg 4, but also in a PDCCH before the Msg 4, so that the first apparatus can feed back the NACK on the corresponding second time-frequency resource based on the second indication information. This helps a peer side accurately receive the NACK feedback on the corresponding second time-frequency resource and proceed with a subsequent procedure.

In a possible implementation, the first apparatus receives a third message, where the third message includes the downlink control information and the first indication information.

In the method, if a network side does not detect a corresponding ACK signal within a time period, it is considered that the first apparatus does not receive the Msg 4, and the third message may be sent to the first apparatus again (the third message includes the downlink control information and the first indication information in the first message, and may further include other information, which is not limited in this application). This helps ensure that the first apparatus can correctly receive the Msg 4 and complete a random access procedure.

In a possible implementation, the first message further includes an identifier of a terminal; or the first message is scrambled by using the identifier of the terminal.

In a possible implementation, the identifier of the terminal indicates random access contention resolution.

In the foregoing method, if the first message is a message after the Msg 3 in the four-step random access procedure and is carried on a PDCCH, to implement a contention resolution function of the Msg 4, the first message may carry the identifier of the terminal, to indicate that the corresponding terminal is authorized (random access contention resolution); or the first message may be scrambled by using the identifier of the terminal, to indicate that the corresponding terminal is authorized.

According to a second aspect, this application provides a communication method. The method is performed by a second apparatus, or performed by a component (for example, a processor, a chip, or a chip system) of the second apparatus, or may be performed by a logical module that can implement all or some functions of the second apparatus. For example, the second apparatus may be a network device (for example, a base station). The second apparatus sends a first message, where the first message includes downlink control information and first indication information, the downlink control information indicates a first time-frequency resource, and the first indication information indicates random access contention resolution. The second apparatus receives a second message on the first time-frequency resource.

In this method, the random access procedure is simplified. For example, downlink control information DCI, normally carried on a physical downlink control channel PDCCH, is simplified as the DCI accompanying the Msg 4. This helps reduce indication overhead or eliminate PDCCH blind detection, and lower design complexity of A-IoT. For another example, the first indication information indicating random access conflict resolution is directly carried in a PDCCH after the Msg 3. This bypasses a Msg 4 procedure, thereby reducing system message overhead.

In a possible implementation, the first message is a downlink message, and is carried on a physical downlink shared channel.

In this method, the first message is, for example, the Msg 4 in the four-step random access procedure or the Msg B in the two-step random access procedure, and is carried on a physical downlink shared channel PUSCH. This helps reduce indication overhead.

In a possible implementation, the first message is a downlink message and is carried on a physical downlink control channel.

In this method, the first message is, for example, a message after the Msg 3 in the four-step random access procedure, and is carried on a PDCCH to serve as the Msg 4. This helps reduce system message overhead.

In a possible implementation, the downlink control information further indicates a size of uplink data.

In the method, the downlink control information may further indicate a size of the uplink data, for example, indicate one or more of a packet size, a bit value, or a byte value of the uplink data.

In a possible implementation, the second message is an uplink message and is carried on a physical uplink shared channel or a physical uplink control channel. The second message includes at least one of the following: the uplink data, and a hybrid automatic repeat request acknowledgment HARQ-ACK for the first message.

In this method, it is assumed that the first message is the Msg 4, and the second message is a Msg 5 carried on a physical uplink shared channel PUSCH. An ACK feedback of the Msg 4 may be carried by the Msg 5 (PUSCH). This helps reduce indication overhead.

In a possible implementation, the first message further includes second indication information, and the second indication information indicates a second time-frequency resource. The second apparatus listens, on the second time-frequency resource, for a hybrid automatic repeat request negative acknowledgment HARQ-NACK for the first message.

In the method, the second indication information may be carried in the first message (for example, DCI accompanying the Msg 4), to help reduce indication overhead. The second apparatus may listen to a feedback message of the first apparatus on the corresponding second time-frequency resource, to proceed with a subsequent procedure.

In a possible implementation, if the HARQ-ACK for the first message is not detected within a preset time period, the second apparatus sends a third message, where the third message includes the downlink control information and the first indication information.

In the method, if a network side does not detect a corresponding ACK signal within a time period, it is considered that the first apparatus does not receive the Msg 4, and the third message may be sent to the first apparatus again (the third message includes the downlink control information and the first indication information in the first message, and may further include other information, which is not limited in this application). This helps ensure that the first apparatus can correctly receive the Msg 4 and complete a random access procedure.

In a possible implementation, the first message further includes an identifier of a terminal; or the first message is scrambled by using the identifier of the terminal.

In a possible implementation, the identifier of the terminal indicates random access contention resolution.

In the foregoing method, if the first message is a message after the Msg 3 in the four-step random access procedure and is carried on a PDCCH, to implement a contention resolution function of the Msg 4, the first message may carry the identifier of the terminal, to indicate that the corresponding terminal is authorized (random access contention resolution); or the first message may be scrambled by using the identifier of the terminal, to indicate that the corresponding terminal is authorized.

According to a third aspect, this application provides a communication method. The method is implemented through interaction between a first apparatus and a second apparatus. For example, the first apparatus may be a terminal, and the second apparatus may be a network device. The communication method includes the following steps: The second apparatus sends a first message, where the first message includes downlink control information and first indication information, the downlink control information indicates a first time-frequency resource, and the first indication information indicates random access contention resolution. The first apparatus receives the first message. The first apparatus sends a second message on the first time-frequency resource, and the second apparatus receives the second message on the first time-frequency resource.

In this method, the random access procedure is simplified. For example, downlink control information DCI, normally carried on a physical downlink control channel PDCCH, is simplified as DCI accompanying the Msg 4. This helps reduce indication overhead or eliminate PDCCH blind detection, and lower design complexity of A-IoT. For another example, first indication information indicating random access conflict resolution is directly carried in a PDCCH after the Msg 3. This bypasses a Msg 4 procedure, thereby reducing system message overhead.

Optionally, for another implementation of the communication method, refer to corresponding descriptions in the first aspect and the second aspect. Details are not described herein again.

According to a fourth aspect, this application provides a communication apparatus. The communication apparatus may be a terminal, or may be an apparatus of a terminal, or may be an apparatus that can be used together with a terminal. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive a first message, where the first message includes downlink control information and first indication information, the downlink control information indicates a first time-frequency resource, and the first indication information indicates random access contention resolution. The communication unit is further configured to send a second message on the first time-frequency resource.

In a possible implementation, the first message is a downlink message, and is carried on a physical downlink shared channel.

In a possible implementation, the first message is a downlink message and is carried on a physical downlink control channel.

In a possible implementation, the downlink control information further indicates a size of uplink data.

In a possible implementation, the second message is an uplink message and is carried on a physical uplink shared channel or a physical uplink control channel. The second message includes at least one of the following: the uplink data, and a hybrid automatic repeat request acknowledgment HARQ-ACK for the first message.

In a possible implementation, the first message further includes second indication information, and the second indication information indicates a second time-frequency resource. If the first message is not correctly detected, the communication unit is configured to send, on the second time-frequency resource, a hybrid automatic repeat request negative acknowledgment HARQ-NACK for the first message.

In a possible implementation, the first message is carried on a physical downlink shared channel, and the second indication information is carried on a physical downlink control channel sent before the first message, and indicates the second time-frequency resource. If the first message is not correctly detected, the communication unit is configured to send, on the second time-frequency resource, a hybrid automatic repeat request negative acknowledgment HARQ-NACK for the first message.

In a possible implementation, the communication unit is configured to receive a third message, where the third message includes the downlink control information and the first indication information.

In a possible implementation, the first message further includes an identifier of a terminal; or the first message is scrambled by using the identifier of the terminal.

In a possible implementation, the identifier of the terminal indicates random access contention resolution.

In a possible implementation, the processing unit is configured to process information about the first apparatus. For example, the processing unit is configured to listen to the first message, and determine whether the first message is correctly detected. For example, the processing unit is configured to: if the first message is not detected within a preset time period and/or on a corresponding time-frequency resource, determine that the first message is not correctly detected.

According to a fifth aspect, this application provides a communication apparatus. The communication apparatus may be a network device, may be an apparatus in a network device, or may be an apparatus that can be used together with a network device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to send a first message, where the first message includes downlink control information and first indication information, the downlink control information indicates a first time-frequency resource, and the first indication information indicates random access contention resolution. The communication unit is further configured to receive a second message on the first time-frequency resource.

In a possible implementation, the first message is a downlink message, and is carried on a physical downlink shared channel.

In a possible implementation, the first message is a downlink message and is carried on a physical downlink control channel.

In a possible implementation, the downlink control information further indicates a size of uplink data.

In a possible implementation, the second message is an uplink message and is carried on a physical uplink shared channel or a physical uplink control channel. The second message includes at least one of the following: the uplink data, and a hybrid automatic repeat request acknowledgment HARQ-ACK for the first message.

In a possible implementation, the first message further includes second indication information, and the second indication information indicates the second time-frequency resource. The processing unit is configured to listen, on the second time-frequency resource by using the communication unit, to a hybrid automatic repeat request negative acknowledgement HARQ-NACK for the first message.

In a possible implementation, if the HARQ-ACK for the first message is not detected within a preset time period, the communication unit is configured to send a third message, where the third message includes the downlink control information and the first indication information.

In a possible implementation, the first message further includes an identifier of a terminal; or the first message is scrambled by using the identifier of the terminal.

In a possible implementation, the identifier of the terminal indicates random access contention resolution.

For the fourth aspect and the fifth aspect, in an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, and the transceiver includes a transmitter and a receiver) in the communication apparatus, for example, implemented by using an antenna, a feeder, and a codec in the communication apparatus. If the communication apparatus is a chip disposed in a device, the processing unit may be a processing circuit, a logic circuit, or the like of the chip, and the communication unit may be an input/output interface of the chip, for example, an input/output circuit or a pin.

According to a sixth aspect, this application provides a communication apparatus, including a processor, configured to execute instructions. Optionally, the communication apparatus further includes a memory. The memory is configured to store the instructions. When the instructions are executed by the processor, the communication apparatus is enabled to implement at least one of the following: the method according to any one of the first aspect and the possible implementations of the first aspect, and the method according to any one of the second aspect and the possible implementations of the second aspect. Optionally, the processor is coupled to the memory.

According to a seventh aspect, this application provides a communication system. The communication system includes at least one of the apparatuses or devices in the fourth aspect to the sixth aspect, so that the at least one of the apparatuses or devices performs at least one of the following: the method according to any one of the first aspect and the possible implementations of the first aspect, and the method according to any one of the second aspect and the possible implementations of the second aspect.

According to an eighth aspect, this application provides a computer-readable storage medium. The computer-readable storage medium stores instructions, and when the instructions are run on a computer, the computer is enabled to perform at least one of the following: the method according to any one of the first aspect and the possible implementations of the first aspect, and the method according to any one of the second aspect and the possible implementations of the second aspect.

According to a ninth aspect, this application provides a computer program product, including instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a tenth aspect, this application provides a chip, and the chip includes a processor (or a logic circuit). Optionally, the chip may further include a communication interface (or an interface), configured to implement at least one of the following: the method according to any one of the first aspect and the possible implementations of the first aspect, and the method according to any one of the second aspect and the possible implementations of the second aspect. In a possible implementation, if the chip is a minimum processing unit in an entire system, the chip may be a processor, or may include a processor and a memory, or may include a processor, a memory, and a transceiver, and is configured to implement at least one of the following: the method according to any one of the first aspect and the possible implementations of the first aspect, and the method according to any one of the second aspect and the possible implementations of the second aspect.

According to an eleventh aspect, this application provides a chip system. The chip system includes a processor and an interface. Optionally, the chip system may further include a memory, configured to implement at least one of the following: the method according to any one of the first aspect and the possible implementations of the first aspect, and the method according to any one of the second aspect and the possible implementations of the second aspect. The chip system may include a chip, or may include a chip and another discrete component.

### BRIEF DESCRIPTION OF DRAWINGS

FIG. 1 is a diagram of a communication system according to this application;
FIG. 2 is a diagram of a four-step RACH procedure;
FIG. 3 is a diagram of a two-step RACH procedure;
FIG. 4 is a schematic flowchart of a communication method according to this application;
FIG. 5 is a diagram of indicating a first time-frequency resource by using DCI accompanying a Msg 4 according to this application;
FIG. 6 is a diagram of indicating a first time-frequency resource by using DCI accompanying a Msg B according to this application;
FIG. 7 is a diagram of indicating a first time-frequency resource and contention resolution by using a PDCCH after a Msg 3 according to this application;
FIG. 8 is a diagram of simplified four-step RACH according to this application;
FIG. 9 is a diagram of simplified two-step RACH according to this application;
FIG. 10 is another diagram of simplified four-step RACH according to this application;
FIG. 11 is a diagram of a communication apparatus according to this application; and
FIG. 12 is a diagram of another communication apparatus according to this application.

### DESCRIPTION OF EMBODIMENTS

In embodiments of this application, "/" may represent an "or" relationship between associated objects. For example, A/B may represent A or B. "and/or" may be used to indicate that there are three relationships between associated objects. For example, A and/or B may represent the following three cases: Only A exists, both A and B exist, and only B exists, where A and B may be singular or plural. For ease of describing technical solutions in embodiments of this application, words such as "first" and "second" may be used to distinguish technical features with a same or similar function in embodiments of this application. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes the technical solutions in embodiments of this application with reference to the accompanying drawings in embodiments of this application.

To resolve problems of low access efficiency and high access overhead of a low power consumption device during random access, a communication method provided in this application is a simplified random access solution. This helps reduce system message overhead or indication overhead.

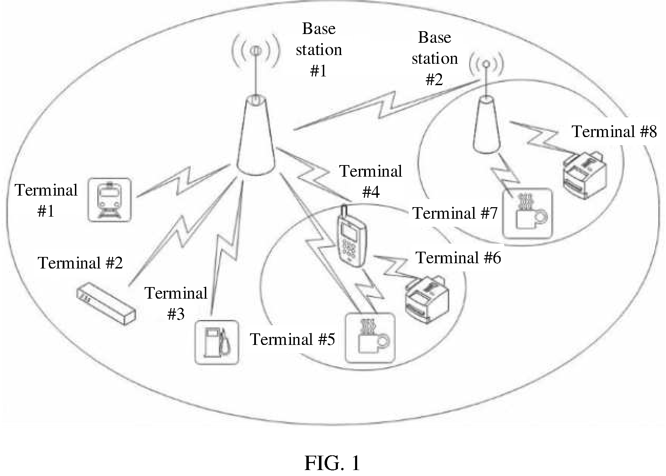

The communication method provided in this application may be applied to a communication system shown in FIG. 1. For example, the communication system includes a network device and a terminal. In FIG. 1, only two network devices (for example, a base station #1 and a base station #2 in FIG. 1) and a plurality of terminals (for example, a terminal #1 to a terminal #8) are used as an example for description. A quantity of network devices and a quantity of terminals are not limited in this application. For example, in the communication system, the base station #1 may send information to one or more of the terminal #1 to the terminal #6. The base station #1 may send information to the terminal #7 and/or the terminal #8 by using the base station #2. Optionally, the terminal #4 to the terminal #6 may also form a communication system. In the communication system, the terminal #5 may send information to the terminal #4 and/or the terminal #6. Optionally, the base station #2, the terminal #7, and the terminal #8 may also form a communication system. In the communication system, the base station #2 may send information to the terminal #7 and/or the terminal #8.

The communication system in this application may include but is not limited to communication systems of various radio access technologies (radio access technology, RAT), for example, a narrowband Internet of things (narrowband Internet of things, NB-IoT) system, a long term evolution (long term evolution, LTE) communication system, a 5G (or referred to as new radio (new radio, NR)) communication system, and a transition system between the LTE communication system and the 5G communication system. The transition system may also be referred to as a 4.5G communication system. The communication system may alternatively be a future communication system, for example, a 6th generation (6th generation, 6G) system or even a 7th generation (7th generation, 7G) system. Optionally, the communication system in this application may alternatively be a single-hop (single-hop) or multi-hop (multi-hop) relay system including a relay node. A form of the relay may be the foregoing network device, terminal, or the like. This application may be applied to a high-frequency scenario, for example, a millimeter wave scenario, or may be applied to a low-frequency sub-6G scenario, for example, a 700/900 megahertz (MHz) or a 2.1/2.6/3.5 gigahertz (GHz) frequency band. A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The terminal, also referred to as a terminal device (terminal), a user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal in a 5G network, a terminal in a future evolved network, or a terminal in a future communication system.

The network device in this application is a radio access network (radio access network, RAN) node (or device) that connects the terminal to a wireless network, and may also be referred to as a base station. For example, examples of some RAN nodes are: a continuously evolved NodeB (the next generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in Internet of vehicles (for example, a vehicle-to-everything (vehicle-to-everything, V2X) device), a communication device in device-to-device (device-to-device, D2D) communication, or the like.

In a possible implementation, the network device may include a central unit (central unit, CU) node, or a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by a CU, functions of some or all of remaining protocol layers are distributed in a DU, and the CU centrally controls the DU. In some deployment of the network device, the CU may be further split into a CU-control plane (control plane, CP), a CU-user plane (user plane, UP), and the like. In another possible implementation, the network device may be an antenna unit (radio unit, RU) or the like. In another possible implementation, the network device may be an open radio access network (open radio access network, ORAN) architecture or the like. A specific type of the network device is not limited in this application. For example, when the network device is of the ORAN architecture, the network device in embodiments of this application may be an access network device in an ORAN, a module in the access network device, or the like. In an ORAN system, a CU may also be referred to as an open central unit (open CU, O-CU), a DU may also be referred to as an open distributed unit (O-DU), the CU-DU may also be referred to as an open central unit-distributed unit (O-CU-DU), the CU-UP may also be referred to as an open central unit-control plane (O-CU-UP), and the RU may also be referred to as an open antenna unit (O-RU).

Optionally, signaling interaction in this application may include but is not limited to one or more of the following: radio resource control (radio resource control, RRC) signaling interaction, medium access control (medium access control, MAC) signaling interaction, physical layer (physical layer, PHY) signaling and data interaction, and the like. For example, the RRC signaling interaction includes sending and receiving RRC signaling; the MAC signaling interaction includes sending and receiving MAC-CE signaling; the PHY signaling and data interaction include sending and receiving uplink/downlink control signaling, and/or sending and receiving uplink/downlink data.

It should be noted that
"sending" and "receiving" in embodiments of this application represent signal transfer directions. For example, "sending information to a terminal" may be understood as a destination of the information being the terminal device, and may include direct sending through an air interface, or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination end, but the destination end may understand valid information from the source. Similar expressions in this application may be understood similarly. Details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and a remaining part of the to-be-indicated information is known or pre-agreed on. For example, specific information may alternatively be indicated by using an arrangement sequence of pieces of information that is pre-agreed on (for example, predefined in a protocol), to reduce indication overhead to a specific extent. A specific indication manner is not limited in this application. It may be understood that, for a transmitter of the indication information, the indication information may indicate the to-be-indicated information, and for a receiver of the indication information, the indication information may be used for determining the to-be-indicated information.

I. For ease of understanding, the following describes in detail definitions of related nouns in this application.

### 1. Low-power ambient internet of things (ambient internet of things, A-IoT):

A-IoT is a type of IoT devices with ultra-low power consumption, and mainly includes active A-IoT and passive A-IoT. The active A-IoT is a powered tag (tag) or a powered terminal, and can transmit a wireless communication signal by using energy stored in an energy storage module of the active A-IoT. The active A-IoT is also referred to as an active tag (active tag), a powered tag, or the like. The passive A-IoT mainly obtains energy from an external radio frequency signal, and performs communication by using a backscatter radio frequency signal, to finally implement ultra-low power consumption or even zero power consumption.

### 2. NB-IoT random access procedure:

After a terminal completes cell search, the terminal has achieved downlink synchronization with a cell. Therefore, the terminal can receive downlink data. However, the terminal can obtain uplink resources and perform uplink transmission only after the terminal obtains uplink synchronization with the cell. The terminal establishes a connection to the cell and achieves uplink synchronization through a random access procedure. After the random access is completed, the terminal is in a connected state, and the terminal and a network device can communicate with each other through a dedicated transmission channel. For example, when a UE performs an initial access procedure or performs an RRC reestablishment, the terminal needs to establish a connection to the network device by initiating a random access procedure. A specific random access procedure includes a four-step random access channel (random access channel, RACH) procedure and a two-step RACH procedure.

### (1) Four-step RACH procedure:

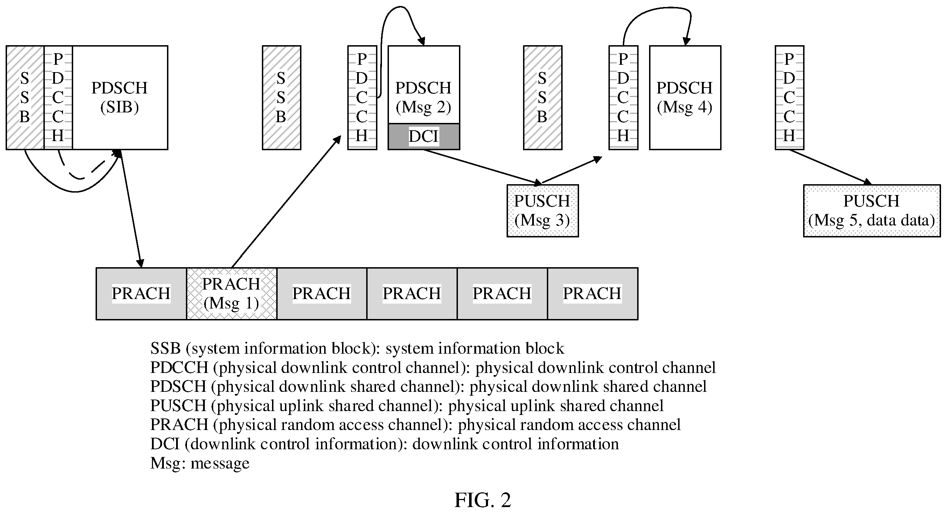

For example, FIG. 2 is a diagram of a four-step RACH procedure. The diagram shows information such as an exchanged message and a corresponding channel. The following describes each step in detail.
① A terminal sends a random access request message. Correspondingly, a network side receives the random access request message.

The message sent in step 1 is also referred to as a message 1 (Msg 1). For example, when the network side has determined a quantity of coverage levels of a cell and a narrowband physical random access channel (narrowband physical random access channel, NPRACH) corresponding to each coverage level, and broadcasts, to the terminal by using a system information block (system information block, SIB), the coverage level and the NPRACH corresponding to each coverage level, the terminal may measure reference signal received power (reference signal received power, RSRP) of a broadcast signal, and determine a coverage level of the terminal. Then, the terminal sends a preamble (preamble) on an NPRACH resource corresponding to the coverage level. Optionally, the terminal may further notify the network side whether a Msg 3 of the terminal supports multi-tone (multi-tone) transmission. Optionally, the SIB may be carried in a physical downlink shared channel (physical downlink shared channel, PDSCH). Optionally, the Msg 1 may be carried in a physical random access channel (physical random access channel, PRACH).

② The network side determines a repetition count and a quantity of subcarriers used for the Msg 3.

③ The network side sends a random access response message. Correspondingly, the terminal receives the random access response message.

The random access response message (random access response, RAR) sent in step 3 is also referred to as a Msg 2. The network side may allocate a radio network temporary identifier (radio network temporary identifier, RNTI), and allocate an uplink scheduling grant (UL grant) to the Msg 3. For example, the network side may indicate a time-frequency resource of a narrowband physical uplink shared channel (narrowband physical uplink shared channel, NPUSCH) of the Msg 3 by using downlink control information (downlink control information, DCI).

④ The terminal determines, based on a preamble index (preamble index) in the Msg 2, whether the random access response message replied by the network side is successfully received. If the random access response message is not received, the terminal re-initiates a request. If the random access response message is received, the terminal sends the Msg 3. Optionally, the Msg 3 includes a unique identifier of one or more terminals, and is used for conflict resolution of a Msg 4.

⑤ The network side sends the Msg 4. Correspondingly, the terminal receives the Msg 4.

The Msg 4 may include a unique identifier of the terminal. The terminal determines whether random access is successful by listening to whether the Msg 4 carries related identification information. For example, if a Msg carries a unique identifier of the terminal, it indicates that the terminal successfully performs random access. Optionally, the network side further indicates, on a physical downlink control channel (physical downlink control channel, PDCCH), a time-frequency resource of an NPUSCH of a Msg 5, where the Msg 5 is used for uplink data transmission.

### (2) Two-step RACH procedure:

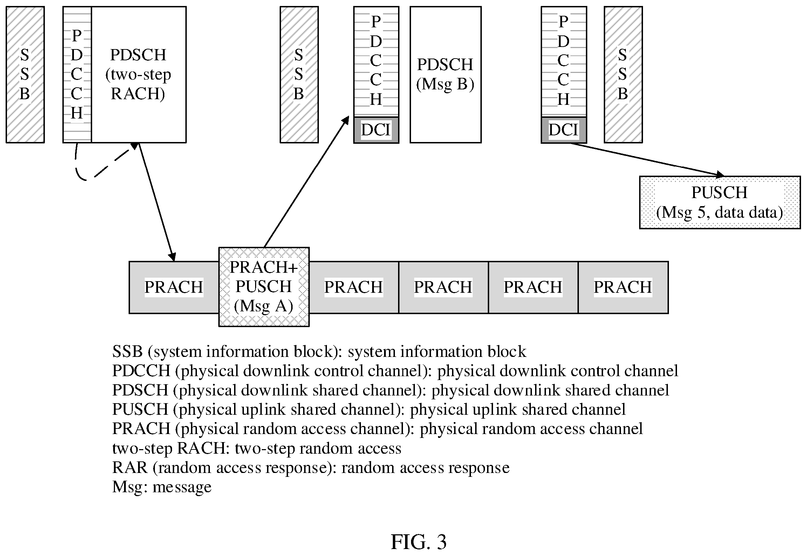

For example, FIG. 3 is a diagram of a two-step RACH procedure. The diagram shows information such as an exchanged message and a corresponding channel. The following describes each step in detail.

The two-step RACH mainly includes a Msg A and a Msg B. The Msg A includes a PRACH preamble and PUSCH transmission (for example, includes the Msg 1 and the Msg 3 in the four-step RACH), which are respectively referred to as a Msg A-PRACH and a Msg A-PUSCH. Optionally, the Msg A-PRACH preamble is independent of a four-step RACH preamble. The Msg B includes a random access response and a contention resolution message (for example, includes the RAR and the Msg 4 in the four-step RACH). The Msg B includes at least one of the following: a fallback indication, a fallback RAR (fallback RAR), or a success RAR (success RAR). Optionally, a single Msg B may include a success access indication of one or more UEs.
① The terminal sends a random access request message. Correspondingly, the network side receives the random access request message.

For example, the terminal sends a Msg A, where the Msg A includes a PRACH preamble and PUSCH transmission.

② After sending the random access request message, the terminal waits for a random access response from the network side, and performs a corresponding operation based on the received message.

In a possible implementation, if the network side does not detect a Msg A-PRACH, the network side does not send a Msg B. Correspondingly, if the terminal does not receive an RAR, the terminal retransmits the Msg A or returns to the four-step RACH through Msg 1 transmission.

In a possible implementation, if the network side detects the Msg A-PRACH but does not successfully decode a Msg A-PUSCH, the network side sends a fallback RAR. Correspondingly, the UE receives the fallback RAR, and returns to the four-step RACH through Msg 3 sending.

In a possible implementation, if the network side detects the Msg A and successfully decodes the Msg A-PUSCH, the network side sends the Msg B to the terminal, where the Msg B may carry a contention resolution identifier (ID), to indicate that two-step RACH is successfully completed.

Optionally, the Msg B may include DCI. For example, it is assumed that there are a plurality of UEs and a plurality of success RARs. If a UE receives a Msg B that includes a success RAR sent to the UE, the UE may send a hybrid automatic repeat request acknowledgment (hybrid automatic repeat request acknowledgment, HARQ-ACK) message feedback. The feedback message needs a HARQ slot allocated by the DCI for transmission. For example, there is a fixed timing relationship between transmission and an ACK/NACK corresponding to the transmission in LTE. Considering flexibility in NB-IoT, a timing relationship between a narrowband physical downlink shared channel (narrowband physical downlink shared channel, NPDSCH) and an ACK/NACK corresponding to the NPDSCH is not fixed. Therefore, the timing relationship needs to be configured. The network side may further indicate a PUSCH time-frequency resource of a Msg 5 on a PDCCH, and the time-frequency resource is used for uplink data transmission.

### II. Communication method provided in this application:

In the communication method provided in this application, after random access is completed, resource scheduling for uplink data transmission by a first apparatus may be directly implemented on a PDCCH after the Msg 4, the Msg B, or the Msg 3. This helps simplify a random access procedure and reduce indication overhead.

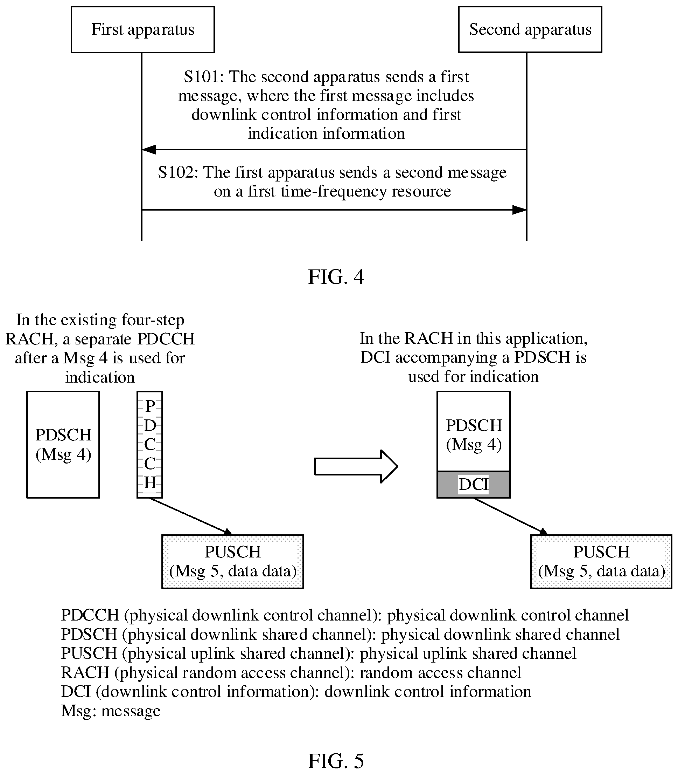

FIG. 4 is a schematic flowchart of a communication method according to this application. The method may be implemented through exchange between a first apparatus and a second apparatus. The first apparatus is, for example, a terminal or an apparatus of a terminal, and the second apparatus is, for example, a network device or an apparatus of a network device. The method includes the following steps.

S101: The second apparatus sends a first message, where the first message includes downlink control information and first indication information. Correspondingly, the first apparatus receives the first message.

The downlink control information indicates a first time-frequency resource, and the first indication information indicates random access contention resolution. For example, if the first indication information indicates random access contention resolution, it indicates that the first apparatus has successfully completed random access. If the downlink control information indicates the first time-frequency resource, the first apparatus that has successfully completed random access may send uplink data on the first time-frequency resource. Optionally, the downlink control information may specifically indicate a location of the first time-frequency resource. For example, the DCI may specifically indicate at least one of the following: a slot corresponding to a first time domain resource, a subcarrier corresponding to a first frequency domain resource, and the like. Optionally, the downlink control information may further indicate a size of the uplink data. For example, the DCI may indicate at least one of the following: a packet size, a bit value, or a byte value of the uplink data.

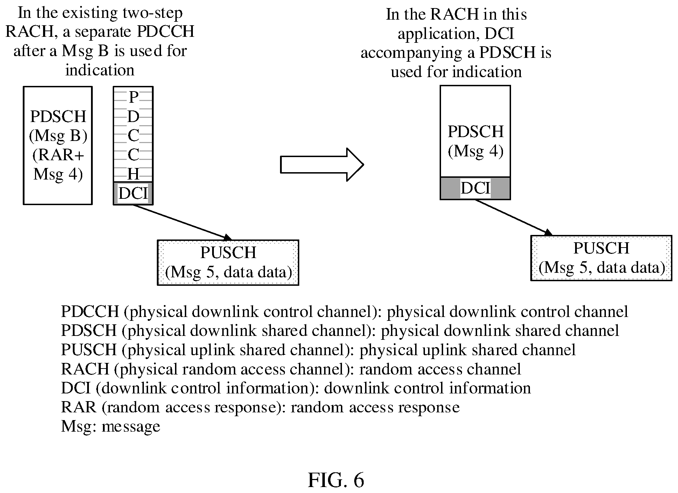

Optionally, the first message is a downlink message and is carried on a physical downlink shared channel. For example, FIG. 5 is a diagram of indicating a first time-frequency resource by using DCI accompanying a Msg 4 according to this application. Assuming that the first message is the Msg 4 (PDSCH) in the four-step RACH procedure, the downlink control information is delivered as DCI that accompanies the Msg 4 (PDSCH). Unlike the protocol standard that relies on a separate PDCCH to carry downlink control information, this application embeds downlink control information directly with the PDSCH, thereby reducing indication overhead. In addition, the first indication information indicates random contention resolution, fulfilling a function of the Msg 4. For another example, FIG. 6 is a diagram of indicating a first time-frequency resource by using DCI accompanying a Msg B according to this application. Assuming that the first message is a Msg B (PDSCH) in the two-step RACH procedure, downlink control information is embedded as additional indication information within the Msg B to indicate a first time-frequency resource. No separate PDCCH is needed to carry the downlink control information, thereby reducing indication overhead. Similarly, the first indication information indicates random contention resolution, fulfilling a function of the Msg B.

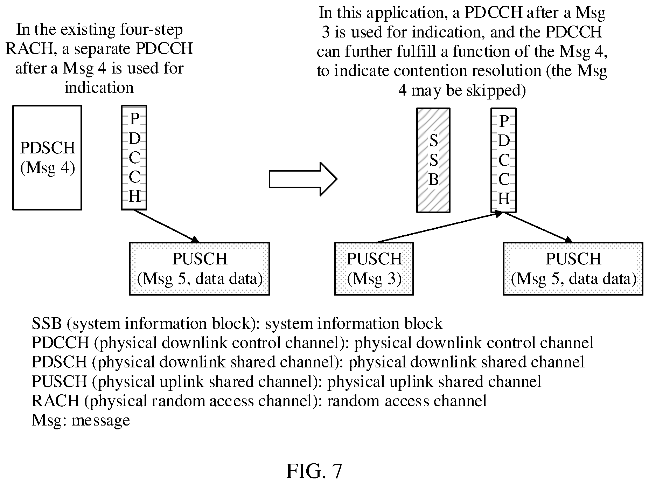

Optionally, the first message is a downlink message and is carried on a physical downlink control channel. For example, FIG. 7 is a diagram of indicating a first time-frequency resource and contention resolution by using a PDCCH after a Msg 3 according to this application. Assuming that the first message is a PDCCH sent after the Msg 3 in the four-step RACH procedure, downlink control information is delivered as DCI that accompanies the PDCCH. The PDCCH further carries first indication information, fulfilling a function of a Msg 4 (indicating random access contention resolution). In this case, a procedure related to the Msg 4 may be skipped in the RACH procedure. After receiving the PDCCH, the first apparatus may send uplink data on the first time-frequency resource.

S102: The first apparatus sends a second message on the first time-frequency resource. Correspondingly, the second apparatus receives the second message on the first time-frequency resource.

The second message is an uplink message and is carried on a physical uplink shared channel or a physical uplink control channel (physical uplink control channel, PUCCH). For example, the second message is a Msg 5 (a PUSCH or a PUCCH), and includes uplink data, where the uplink data may be sent on the first time-frequency resource. Correspondingly, the second apparatus receives the uplink data on the first time-frequency resource.

Optionally, the second message further includes ACK/NACK feedback information for the first message. For example, it is assumed that after sending the first message (the Msg 4 and DCI that accompanies the Msg 4), the second apparatus listens to the ACK/NACK feedback information from the first apparatus. If a corresponding ACK feedback information (or a corresponding preamble) is received, the second apparatus proceeds to receive the Msg 5.

In this embodiment, the second apparatus simplifies the random access procedure. For example, downlink control information DCI, normally carried on a physical downlink control channel PDCCH, is simplified as DCI accompanying the Msg 4. This helps reduce indication overhead or eliminate PDCCH blind detection, and lower design complexity of A-IoT. For another example, first indication information indicating random access conflict resolution is directly carried in a PDCCH after the Msg 3. This bypasses a Msg 4 procedure, thereby reducing system message overhead.

III. A specific implementation in which the communication method provided in this application is applied to a RACH scenario is as follows.

Example 1: In the four-step RACH scenario, scheduling of the uplink Msg 5 is indicated by using DCI carried along with the Msg 4 (PDSCH).

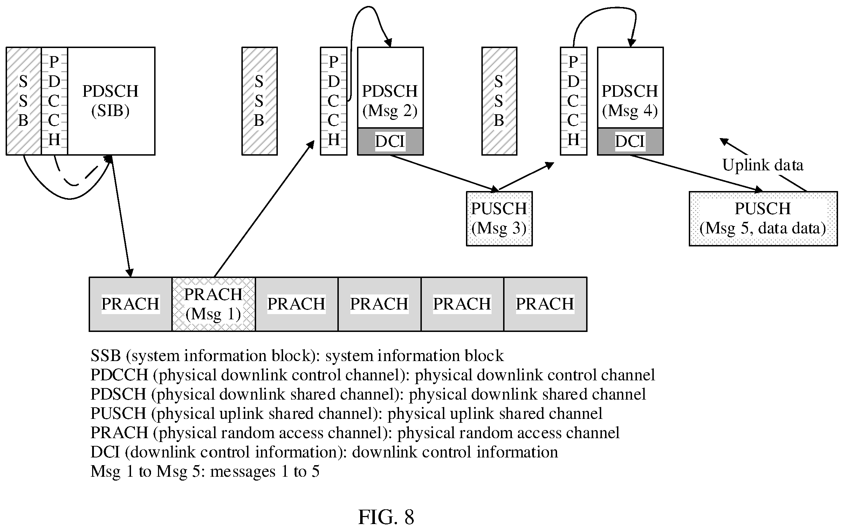

For example, FIG. 8 is a diagram of simplified four-step RACH according to this application. The diagram shows information such as an exchanged message and a corresponding channel. A step before the second apparatus sends the Msg 4 (PDSCH) is similar to that in FIG. 2. For a specific implementation, refer to the corresponding descriptions in ① to ④ in the embodiment of FIG. 2. Details are not described herein again. The following describes in detail related procedures of the first message (the Msg 4) and the second message (the Msg 5).

For example, the second apparatus sends the Msg 4 (PDSCH) and DCI accompanying the Msg 4, to indicate the first time-frequency resource and indicate random access contention resolution, thereby reducing indication overhead.

Optionally, the second message is an uplink message and is carried on a physical uplink shared channel or a physical uplink control channel. The second message includes at least one of the following: uplink data, and a hybrid automatic repeat request acknowledgment HARQ-ACK for the first message. For example, after sending the Msg 4, the second apparatus may listen to ACK/NACK feedback information from a UE. If a corresponding ACK signal (or a corresponding preamble) is received, the second apparatus continuously receives the Msg 5. In other words, for ACK feedback information of the Msg 4, the ACK feedback information is carried in the Msg 5 (PUSCH).

Optionally, if HARQ-ACK for the first message (Msg 4) is not detected within a preset time period, the second apparatus determines that the first apparatus fails to receive the Msg 4, and the second apparatus sends a third message, where the third message includes downlink control information and first indication information. That is, the second apparatus may send the downlink control information and the first indication information to the first apparatus again, and indicate a first time-frequency resource to the first apparatus again, to implement scheduling of the Msg 5. The third message may be the same as the first message (that is, the second apparatus resends the Msg 4), or may include the Msg 4 and other information. This is not limited in this application. An implementation in which the second apparatus sends the third message may be considered as that no HARQ-NACK is fed back.

Optionally, the first apparatus may send ACK/NACK for the first message on a preset second time-frequency resource. The second time-frequency resource is indicated by using second indication information. The second indication information may be carried in the first message (Msg 4), or may be carried in a PDCCH before the Msg 4. The following describes two indication manners and corresponding feedback manners.

Indication manner 1: The first message includes the second indication information, and the second indication information indicates the second time-frequency resource.

For example, the second apparatus carries the second indication information to DCI accompanying the Msg 4, and the second indication information indicates the second time-frequency resource corresponding to the ACK/NACK feedback information for the Msg 4. Specifically, the second indication information may indicate a location of the second time-frequency resource. For example, the DCI may specifically indicate at least one of the following: a slot corresponding to a second time domain resource, a subcarrier corresponding to a second frequency domain resource, and the like. If the first apparatus does not correctly detect the Msg 4, the first apparatus may send the HARQ-NACK for the Msg 4 on the second time-frequency resource; or if the first apparatus correctly detects the Msg 4, the first apparatus may send the HARQ-ACK for the Msg 4 on the second time-frequency resource. Correspondingly, the second apparatus may perform listening on the second time-frequency resource, to listen to whether the first apparatus feeds back the HARQ-ACK or the HARQ-NACK for the Msg 4.

Indication manner 2: A PDCCH before the first message includes the second indication information, and the second indication information indicates the second time-frequency resource.

For example, before sending the Msg 4, the second apparatus first carries the second indication information on the PDCCH, where the second indication information indicates the second time-frequency resource corresponding to the NACK feedback information for the Msg 4. If the first apparatus does not correctly detect the Msg 4, the first apparatus may send the HARQ-NACK for the Msg 4 on the second time-frequency resource; or if the first apparatus correctly detects the Msg 4, the first apparatus may send the HARQ-ACK for the Msg 4 on the second time-frequency resource. Correspondingly, the second apparatus may perform listening on the second time-frequency resource, to listen to whether the first apparatus feeds back the HARQ-ACK or the HARQ-NACK for the Msg 4.

Optionally, for the indication manners 1 and 2, after receiving the HARQ-NACK for the Msg 4, the second apparatus may further determine whether to perform retransmission. For example, the second apparatus may resend the third message, or feed back a random access contention failure to the first apparatus. For a specific implementation, refer to descriptions in a standard protocol. Details are not described herein again.

Example 2: In the two-step RACH scenario, scheduling of the uplink Msg 5 is indicated by using DCI carried along with the Msg B (PDSCH).

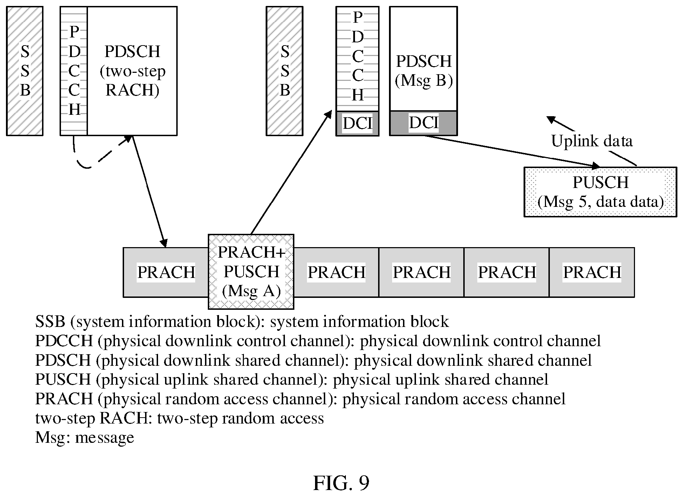

For example, FIG. 9 is a diagram of simplified two-step RACH according to this application. The diagram shows information such as an exchanged message and a corresponding channel. A step before the second apparatus sends the Msg B (PDSCH) is similar to that in FIG. 3. For a specific implementation, refer to the corresponding descriptions in ① and ② in the embodiment of FIG. 3. Details are not described herein again. The following describes in detail related procedures of the first message (the Msg B) and the second message (the Msg 5).

For example, the second apparatus sends the Msg B (PDSCH) and DCI accompanying the Msg B, to indicate the first time-frequency resource and indicate random access contention resolution, thereby reducing indication overhead.

Optionally, the second message is an uplink message and is carried on a physical uplink shared channel or a physical uplink control channel. The second message includes at least one of the following: uplink data, and a hybrid automatic repeat request acknowledgment HARQ-ACK for the first message. For example, after sending the Msg B, the second apparatus may listen to ACK/NACK feedback information from a UE. If a corresponding ACK signal (or a corresponding preamble) is received, the second apparatus continuously receives the Msg 5. In other words, for ACK feedback information of the Msg B, the ACK feedback information is carried in the Msg 5 (PUSCH).

Optionally, if HARQ-ACK for the first message (Msg B) is not detected within a preset time period, the second apparatus determines that the first apparatus fails to receive the Msg B, and the second apparatus sends a third message, where the third message includes downlink control information and first indication information. For a specific implementation, refer to a corresponding description in Example 1. Details are not described herein again.

Optionally, the first apparatus may send ACK/NACK for the first message on a preset second time-frequency resource. The second time-frequency resource is indicated by using second indication information. The second indication information may be carried in the first message (Msg B), or may be carried in a PDCCH before the Msg B. Two indication manners of the second indication information are similar to the indication manners 1 and 2 described in Example 1, and a difference lies in that forms of the first message are different. For example, the second apparatus carries the second indication information to DCI accompanying the Msg B, and the second indication information indicates the second time-frequency resource corresponding to the ACK/NACK feedback information for the Msg B. For example, before sending the Msg B, the second apparatus first carries the second indication information on the PDCCH, where the second indication information indicates the second time-frequency resource corresponding to the NACK feedback information for the Msg 4. A procedure in which the first apparatus performs feedback on the second time-frequency resource and a procedure in which the second apparatus listens to feedback information on the second time-frequency resource are similar to those in Example 1. For example, if the first apparatus does not correctly detect the Msg B, the first apparatus may send HARQ-NACK for the Msg B on the second time-frequency resource; or if the first apparatus correctly detects the Msg B, the first apparatus may send HARQ-ACK for the Msg B on the second time-frequency resource. Correspondingly, the second apparatus may perform listening on the second time-frequency resource, to listen to whether the first apparatus feeds back the HARQ-ACK or the HARQ-NACK for the Msg B.

Example 3: In the four-step RACH scenario, scheduling of the uplink Msg 5 is indicated by using DCI carried along with a PDCCH after the Msg 3.

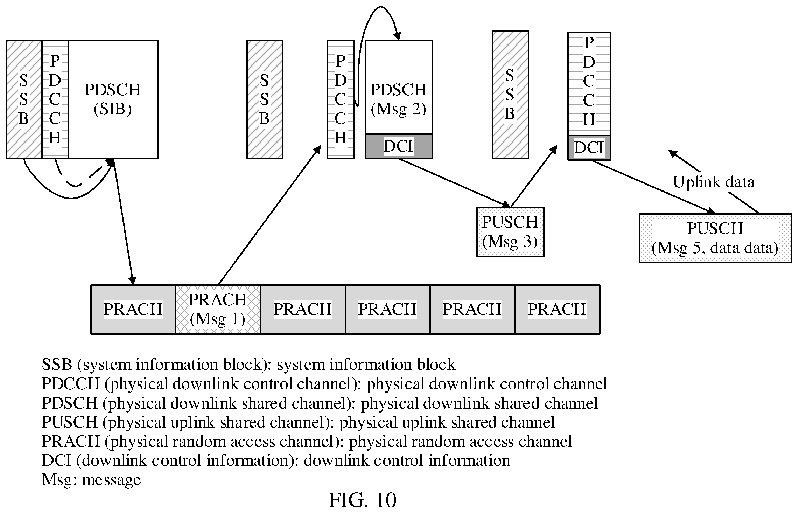

For example, FIG. 10 is another diagram of simplified four-step RACH according to this application. The diagram shows information such as an exchanged message and a corresponding channel. A step before the second apparatus receives the Msg 3 (PUSCH) is similar to that in FIG. 2. For a specific implementation, refer to the corresponding descriptions in ① to ③ in the embodiment of FIG. 2. Details are not described herein again. The following describes in detail related procedures of the first message (a PDCCH after the Msg 3) and the second message (the Msg 5).

For example, after receiving the Msg 3, the second apparatus directly sends the PDCCH and carries the downlink control information and the first indication information, to indicate the first time-frequency resource to the first apparatus and indicate random access contention resolution.

Optionally, a buffer status report (buffer status report, BSR) of the first time-frequency resource of the Msg 5 is carried in the Msg 3. This helps reduce indication overhead of the Msg 5.

Optionally, the PDCCH after the Msg 3 carries the first indication information, fulfilling a function of the Msg 4, to indicate random access contention resolution. The PDCCH may further carry third indication information, and the third indication information indicates that a procedure of the Msg 4 is not activated. For example, one bit of information is added to the PDCCH to indicate that the procedure of the Msg 4 is currently not activated. This helps reduce system message overhead, simplify a random access procedure, and reduce power consumption of a device.

Optionally, whether a network device interface protocol (network device interface, NDI) field of a DCI format 0 (DCI format 0) in DCI accompanying the PDCCH after the Msg 3 is flipped may indicate that the first apparatus and the second apparatus perform retransmission or new transmission.

Optionally, the first message further includes an identifier of a terminal, or the first message is scrambled by using the identifier of the terminal. The identifier of the terminal indicates random access contention resolution. The identifier of the terminal may be, for example, a cell radio network temporary identifier (cell radio network temporary identifier, C-RNTI) or an identifier of a terminal from a core network. For example, for a contention resolution problem, the PDCCH after the Msg 3 carries an identifier of a corresponding terminal, to indicate that the corresponding terminal is authorized to perform uplink data transmission. Specifically, the following carrying manners are included.

Carrying manner 1: is direct carrying. For example, the PDCCH after the Msg 3 directly carries the identifier of the terminal, that is, the first message includes the identifier of the terminal.

Carrying manner 2: is indirect carrying. For example, the PDCCH after the Msg 3 is directly scrambled by using the identifier of the terminal. When receiving a scrambled PDCCH, the corresponding terminal may determine that an identifier used to scramble the PDCCH is consistent with the identifier of the terminal, and determine that the terminal is authorized.

Optionally, the second message is an uplink message and is carried on a physical uplink shared channel or a physical uplink control channel. The second message includes at least one of the following: uplink data, and a hybrid automatic repeat request acknowledgment HARQ-ACK for the first message. For example, after sending the PDCCH after the Msg 3, the second apparatus may listen to ACK/NACK feedback information from a UE. If a corresponding ACK signal (or a corresponding preamble) is received, the second apparatus continuously receives the Msg 5. In other words, for ACK feedback information of the PDCCH, the ACK feedback information is carried in the Msg 5 (PUSCH).

Optionally, if HARQ-ACK for the first message (the PDCCH after the Msg 3) is not detected within a preset time period, the second apparatus determines that the first apparatus fails to receive the PDCCH, and the second apparatus sends a third message, where the third message includes downlink control information and first indication information. For a specific implementation, refer to a corresponding description in Example 1. Details are not described herein again.

Optionally, the first apparatus may send ACK/NACK for the first message on a preset second time-frequency resource. The second time-frequency resource is indicated by the second indication information, and the second indication information may be carried in the first message (the PDCCH after the Msg 3). For example, the second apparatus carries the second indication information to DCI accompanying the PDCCH, and the second indication information indicates the second time-frequency resource corresponding to the ACK/NACK feedback information for the PDCCH. A procedure in which the first apparatus performs feedback on the second time-frequency resource and a procedure in which the second apparatus listens to feedback information on the second time-frequency resource are similar to those in Example 1. For example, if the first apparatus does not correctly detect the PDCCH after the Msg 3, the first apparatus may send HARQ-NACK for the PDCCH on the second time-frequency resource; or if the first apparatus correctly detects the PDCCH after the Msg 3, the first apparatus may send HARQ-ACK for the PDCCH on the second time-frequency resource. Correspondingly, the second apparatus may perform listening on the second time-frequency resource, to listen to whether the first apparatus feeds back the HARQ-ACK or the HARQ-NACK for the PDCCH.

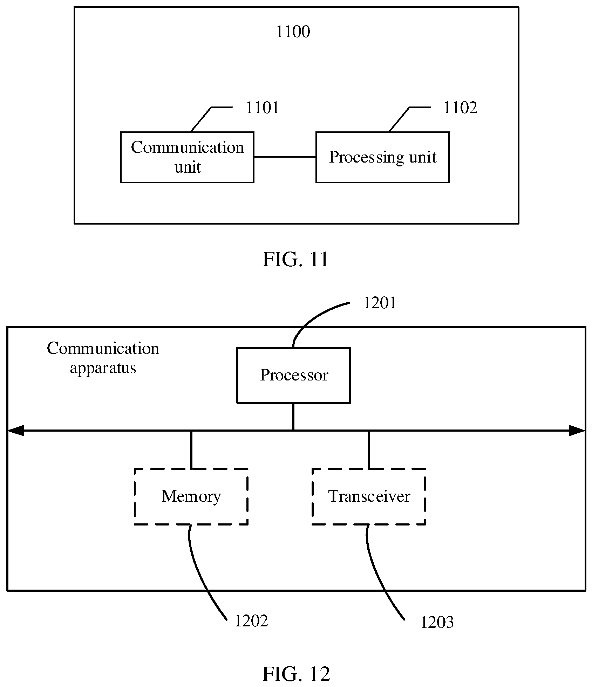

FIG. 11 is a diagram of a communication apparatus according to this application. The apparatus may include modules that are in a one-to-one correspondence with the methods/operations/steps/actions described in any one of the embodiments shown in FIG. 4 to FIG. 10. The modules may be implemented by a hardware circuit, software, or a combination of a hardware circuit and software.

An apparatus 1100 includes a communication unit 1101 and a processing unit 1102, configured to implement the methods performed by the devices in the foregoing embodiments. The communication unit 1101 is also referred to as a transceiver unit. The transceiver unit includes a sending unit and a receiving unit. The sending unit is configured to send a signal, and the receiving unit is configured to receive a signal.

In a possible implementation, the apparatus is a terminal or an apparatus of the terminal. Specifically, the communication unit 1101 is configured to receive a first message, where the first message includes downlink control information and first indication information, the downlink control information indicates a first time-frequency resource, and the first indication information indicates random access contention resolution. The communication unit 1101 is further configured to send a second message on the first time-frequency resource.

Optionally, the processing unit 1102 is configured to process information sent or received by the communication unit 1101. For example, the processing unit 1102 is configured to process the first message received by the communication unit, determine the first time-frequency resource, and determine that random access contention resolution is performed (random access succeeds). In this case, the communication unit 1101 may subsequently send the second message on the first time-frequency resource.

For specific execution procedures of the communication unit 1101 and the processing unit 1102 in this implementation, refer to the descriptions of the steps performed by the first apparatus in the foregoing method embodiments and related descriptions. Details are not described herein again. The communication method implemented by the apparatus simplifies a random access procedure. For example, downlink control information DCI, normally carried on a physical downlink control channel PDCCH, is simplified as DCI accompanying the Msg 4. This helps reduce indication overhead or eliminate PDCCH blind detection, and lower design complexity of A-IoT. For another example, first indication information indicating random access conflict resolution is directly carried in a PDCCH after the Msg 3. This bypasses a Msg 4 procedure, thereby reducing system message overhead.

In a possible implementation, the apparatus is a network device or an apparatus of the network device. Specifically, the communication unit 1101 is configured to send a first message, where the first message includes downlink control information and first indication information, the downlink control information indicates a first time-frequency resource, and the first indication information indicates random access contention resolution. The communication unit 1101 is further configured to receive a second message on the first time-frequency resource.

Optionally, the processing unit 1102 is configured to process information sent or received by the communication unit 1101. For example, the processing unit 1102 is configured to determine downlink control information and first indication information, so that the downlink control information and the first indication information are sent by using the communication unit 1101.

For specific execution procedures of the communication unit 1101 and the processing unit 1102 in this implementation, refer to the descriptions of the steps performed by the second apparatus in the foregoing method embodiments and related descriptions. Details are not described herein again. The communication method implemented by the apparatus simplifies a random access procedure. For example, downlink control information DCI, normally carried on a physical downlink control channel PDCCH, is simplified as DCI accompanying the Msg 4. This helps reduce indication overhead or eliminate PDCCH blind detection, and lower design complexity of A-IoT. For another example, first indication information indicating random access conflict resolution is directly carried in a PDCCH after the Msg 3. This bypasses a Msg 4 procedure, thereby reducing system message overhead.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 12 is another diagram of a structure of a communication apparatus according to an embodiment of this application. The communication apparatus may be configured to perform the steps performed by the first apparatus or the second apparatus in the foregoing method embodiments. For details, refer to related descriptions in the foregoing method embodiments.

The communication apparatus includes a processor 1201. Optionally, the communication apparatus further includes a memory 1202 and a transceiver 1203.

In a possible implementation, the processor 1201, the memory 1202, and the transceiver 1203 are separately connected through a bus, and the memory stores computer instructions.

Optionally, the processing unit 1102 in the foregoing embodiment may be specifically the processor 1201 in this embodiment. Therefore, a specific implementation of the processor 1201 is not described again. The communication unit 1101 in the foregoing embodiment may be specifically the transceiver 1203 in this embodiment. Therefore, a specific implementation of the transceiver 1203 is not described again.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

This application provides another communication apparatus. The device includes a processor and an interface. Optionally, a memory is further included. The processor is coupled to the memory, and the processor is configured to read and execute computer instructions stored in the memory, to implement the communication methods in the embodiments shown in FIG. 4 to FIG. 10.

An embodiment of this application further provides a communication system. The communication system includes a first apparatus and a second apparatus. The first apparatus is configured to perform all or some of the steps performed by the first apparatus in the foregoing embodiments. The second apparatus is configured to perform all or some of the steps performed by the second apparatus in the foregoing embodiments.

This application provides a computer-readable storage medium. The computer-readable storage medium stores a program or instructions. When the program or the instructions are run on a computer, the computer is enabled to perform the communication methods in the embodiments shown in FIG. 4 to FIG. 10.

This application provides a computer program product. The computer program product includes instructions. When the instructions are run on a computer, the computer is enabled to perform the communication methods in the embodiments shown in FIG. 4 to FIG. 10.

This application provides a chip or a chip system. The chip or the chip system includes at least one processor and an interface. The interface and the at least one processor are interconnected through a line. The at least one processor is configured to run a computer program or instructions, to perform the communication methods in the embodiments shown in FIG. 4 to FIG. 10.

The interface in the chip may be an input/output interface, a pin, a circuit, or the like.

The chip system may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clear that a person skilled in the art may make various modifications and variations to this application without departing from the scope of this application. Thus, this application is intended to cover such modifications and variations to this application, provided that the modifications and variations fall within the scope of the claims of this application and their equivalent technologies.

## Claims

1. A communication method, comprising:
receiving a first message, wherein the first message comprises downlink control information and first indication information, the downlink control information indicates a first time-frequency resource, the first indication information indicates random access contention resolution, and the first message is a downlink message and is carried on a physical downlink shared channel or a physical downlink control channel; and
sending a second message on the first time-frequency resource.

2. The method according to claim 1, wherein the downlink control information further indicates a size of uplink data.

3. The method according to claim 1 or 2, wherein the second message is an uplink message and is carried on a physical uplink shared channel or a physical uplink control channel; and the second message comprises at least one of the following: the uplink data, and a hybrid automatic repeat request acknowledgement HARQ-ACK for the first message.

4. The method according to claim 1 or 2, wherein the first message further comprises second indication information, and the second indication information indicates a second time-frequency resource; and
the method further comprises:
if the first message is not correctly detected, sending, on the second time-frequency resource, a hybrid automatic repeat request negative acknowledgment HARQ-NACK for the first message.

5. The method according to claim 1 or 2, wherein the method further comprises:
receiving a third message, wherein the third message comprises the downlink control information and the first indication information.

6. The method according to claim 1, wherein the first message further comprises an identifier of the terminal, or the first message is scrambled by using the identifier of the terminal.

7. The method according to claim 6, wherein the identifier of the terminal indicates random access contention resolution.

8. A communication method, comprising:
sending a first message, wherein the first message comprises downlink control information and first indication information, the downlink control information indicates a first time-frequency resource, the first indication information indicates random access contention resolution, and the first message is a downlink message and is carried on a physical downlink shared channel or a physical downlink control channel; and
receiving a second message on the first time-frequency resource.

9. The method according to claim 8, wherein the downlink control information further indicates a size of uplink data.

10. The method according to claim 8 or 9, wherein the second message is an uplink message and is carried on a physical uplink shared channel; and the second message comprises at least one of the following: the uplink data, and a hybrid automatic repeat request acknowledgement HARQ-ACK for the first message.

11. The method according to claim 8 or 9, wherein the first message further comprises second indication information, and the second indication information indicates a second time-frequency resource; and
the method further comprises:
listening, on the second time-frequency resource, to a hybrid automatic repeat request negative acknowledgment HARQ-NACK for the first message.

12. The method according to claim 8 or 9, wherein the method further comprises:
if no HARQ-ACK for the first message is detected within a preset time period, sending a third message, wherein the third message comprises the downlink control information and the first indication information.

13. The method according to claim 8, wherein the first message further comprises an identifier of the terminal, or the first message is scrambled by using the identifier of the terminal.

14. The method according to claim 13, wherein the identifier of the terminal indicates random access contention resolution.

15. A communication method, comprising:
performing, by a first apparatus, the method according to any one of claims 1 to 7; and
performing, by a second apparatus, the method according to any one of claims 8 to 14.

16. A communication apparatus, comprising a communication unit and a processing unit, wherein the communication unit and the processing unit are configured to perform the method according to any one of claims 1 to 7 or claims 8 to 14.

17. A communication apparatus, comprising a processor, wherein the processor is configured to enable, by using a logic circuit and/or executing instructions, the communication apparatus to perform the method according to any one of claims 1 to 7 or claims 8 to 14.

18. The apparatus according to claim 17, further comprising a memory, wherein the memory is configured to store the instructions.

19. A computer-readable storage medium, wherein the computer-readable storage medium stores instructions, and when the instructions are run on a computer, the computer is enabled to perform the method according to any one of claims 1 to 7 or claims 8 to 14.

20. A chip system, wherein the chip system comprises a processor and an interface, and the processor is configured to execute a computer program, so that the chip system implements the method according to any one of claims 1 to 7 or claims 8 to 14.

21. A computer program product, comprising instructions, wherein when the instructions are run on a computer, the computer is enabled to perform the method according to any one of claims 1 to 7 or 8 to 14.

22. A communication system, comprising at least one of the following apparatuses: an apparatus configured to perform the method according to any one of claims 1 to 7, and an apparatus configured to perform the method according to any one of claims 8 to 14.
